# EUROPEAN PATENT SPECIFICATION

(11) **EP 0 239 123 B1**
(45) Date of publication and mention of the grant of the patent: **12.05.1993**
(21) Application number: 87104587.8
(22) Date of filing: 27.03.1987
(51) Int. Cl.: G11B 5/71, C08G 65/32, C08L 71/02

(54) **Fluoropolyether inner lubricants for magnetic recording media**
Gleitmittel aus Fluoropolyäther für Aufzeichnungsträger
Lubrifiant interne pour support d'enregistrement magnétique en polyéther fluoré

(30) Priority: 27.03.1986 IT 1991086
(43) Date of publication of application: 30.09.1987
(73) Proprietor: AUSIMONT S.p.A., I-20121 Milano (IT)
(72) Inventor: Scarati, Mario Alberto, I-20133 Milan (IT); Caporiccio, Gerardo, I-20149 Milan (IT)
(74) Representative: Barz, Peter, Dr.

(56) References cited:
- EP-A- 0 140 582
- EP-A- 0 165 649
- EP-A- 0 165 650
- GB-A- 2 042 369

## Description

The invention relates to the lubrication of magnetic recording media (records or tapes) based on magnetic pigments by means of inner-type lubrications, consisting of compounds having a fluoropolyether structure, hydrogenated end groups, and a critical solubility, as defined hereinafter, in the polymeric matrix constituting the magnetic layer.

As is known, within the class of magnetic media based on particles or pigments, the recording magnetic medium comprises a layer of magnetic material spread on a rigid or flexible substrate.

Said layer is composed of magnetic oxide particles and/or metal particles dispersed in a thermoplastic or thermosetting polyrmeric binder, the base of which can be a polyvinyl, polyurethane, epoxy or phenolepoxy material, or proper mixtures thereof.

Other compounds are present in these formulations, their task being that of promoting the wettability and the dispersion of the magnetic pigments, or that of acting as lubricants to facilitate the sliding of the reading head on the magnetic medium.

These compounds are generally referred to as "inner lubricants". The inner lubricant must possess a few typical characteristics; it must be partially soluble in the resin and compatible with same, but it must not act as swelling agent or plasticizer of the resin, as in such case it would very adversely affect the compactness and the mechanical characteristics thereof, in particular the resistance to wear.

The inner lubricant's mechanism of action, therefore, is a slow and controlled migration through the micropores of the magnetic layer towards the surface, under the action of the temperature at the point of contact with the reading/writing heads and of the pressure resulting from this contact.

The materials generally utilized as inner lubricants are esters of fatty acids, fatty acids with a branched or unbranched chain, or mixtures thereof.

In spite of securing satisfactory performances and an increase in the lifetime and abrasion resistance of the magnetic medium, these substances, utilized at present in all the flexible magnetic media, are little stable in the long run and are sensitive to oxidation.

It is known that better results with regard to friction and to duration are obtainable by using surface perfluoropolyether lubricants, owing to their higher thermal and chemical stability and to their better lubricating properties.

While at the beginning neutral perfluoropolyethers were utilized as surface lubricants, improvements were achieved later according to what is disclosed in US-A- 4,268,556 and 4,267,238, by introducing end groups of polar and reactive nature into the perfluoropolyether chain.

This method, generally utilized in the field of the magnetic media of a more advanced technology, such as the rigid discs for computers, comprises a step, subsequent to the preparation of the medium, in which a thin lubricant film is applied onto the surface in the form of a dilute solution.

In order to avoid this post-treatment with the lubricant, which involves considerable practical complications and a significant increase in the production costs, there are utilized inner lubricants of the above-mentioned type, which are directly introduced into the resin composition utilized to form the magnetic layer. This process is possible only in the case of flexible magnetic recording media.

However, the tested compounds, of the type of fatty acid esters, exhibited the abovesaid drawbacks.

Thus, there was the increasing need to have available an inner lubricant, stable to heat and to chemical agents, resistant to oxidation and capable of securing the obtainment of magnetic media exhibiting a better performance than that attainable with the known hydrogenated inner lubricants, in particular as regards the use over an extended period of time.

On the other hand, neutral perfluoropolyethers are not utilizable as inner lubricants, due to their low compatibility with and low solubility in the hydrogenated resins utilized as binders.

Such low solubility results in a quick and uncontrolled surface migration of the lubricant, with consequent phenomena of sticking and formation of stains and deposits on the surface.

Furthermore, perfluoropolyether compounds with functional end groups of various type, having too high a solubility in the polymeric matrix used as binder, are not utilizable because, acting as plasticizers, they cause a substantial worsening of the mechanical characteristics of the magnetic layer.

It has now surprisingly been found that particular types of (per)fluoropolyethers having two hydrogenated polar or non-polar end groups and being liquid at a temperature of 25°C, when used as inner lubricants, lead to considerable improvements in the performance of the flexible magnetic media containing such lubricants.

Object of the present invention is, therefore, the use of inner lubricants in resin compositions for coatings of magnetic recording media of the flexible type, said lubricants being bifunctional (per)fluoropolyether compounds, liquid at a temperature of 25°C, having hydrogenated polar or non-polar end groups, an average molecular weight of the (per)fluorooxyalkylene chain of at least 1,000, and a solubility at 20°C in methyl ethyl ketone ranging from 0.05% by weight to 2% by weight, extremes included.

Another object of the present invention are resin compositions containing from 0.5 to 3% by weight of the inner lubricants described above.

The presence of hydrogenated end groups, of the polar or non-polar type, in combination with a sequence of fluoro-oxyalkylene units of a suitable length, ensures a partial compatibility with the resin, as is necessary in order to obtain a constant and controlled migration of the lubricant to the surface. In practice, the suitability of the fluoropolyether compound can be ascertained on the basis of its solubility in methyl-ethyl-ketone at 20°C: it must range from 0.05 to 2% by weight.

The hydrogenated end groups which usually impart the proper solubility degree to the product, are the ones having, for example, hydroxy, ester, aromatic or heterocyclic end groups which contain oxygen.

In particular, the lubricants of the invention have end groups T and T' preferably selected from:
a) 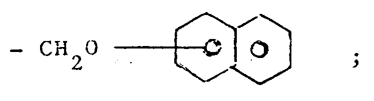
b) -CH₂O-(CH₂CH₂O)_{z}H, where z is an integer from 1 to 3;
c) 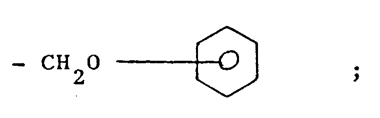
d) -COOR, where R is an alkyl radical with 2 to 12 carbon atoms;
e)

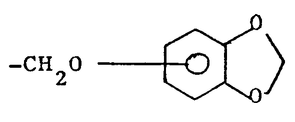

Suitable fluoropolyether compounds employed according to the invention are in particular those belonging to the following classes:
(I) TO(CF₂CF₂O)ₙ(CF₂O)ₘ-T';
(II) 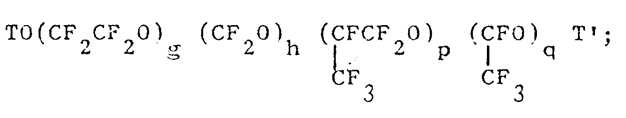
(III) TO(CF₂CF₂CF₂O)ₛT';
(IV) T(OCF₂CF₂CH₂)ₜ OR_{f}O (CH₂CF₂CF₂O)ₜT';
(V) TO(CF₂CF₂O)ᵣT';
(VI)

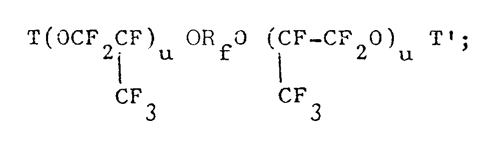

wherein:
T and T', equal or different from each other, are hydrogenated end groups, for instance of the kind defined hereinabove;
indexes n, m, g, h, p, q, s, t, r, u are integers selected in such manner, that the fluoropolyether chain has a mean molecular weight of at least 1 000, preferably from 1 800 to 4 500, and in any case such that the fluoropolyether is liquid at 25°C;
R_{f} is a fluoroalkylene radical preferably containing 1 to 12 carbon atoms; the (per)fluoro-oxyalkylene units being statistically distributed along the chain.

Among the compounds described as suited for use as inner lubricants according to the invention, the preferred are the ones having the perfluoro-oxyalkylene chain of type (I) with both end groups of type a) or of type b) indicated above.

The fluoropolyethers utilizable in the present invention are preparable as follows:
- the ones of class (I) according to the processes described in US-A- 3,242,218;
- the ones of class (II) according to US-A- 3,665,041;
- the ones of classes (III) and (IV) according to EP-A-148,482;
- the ones of class (V) according to US-A- 4,523,039;
- the ones of class (VI) according to EP-A- 148,482.

The functional end groups suitable for the present invention can be introduced according to the methods described in US-A- 3,810,874 and in EP-A- 165,649 and 165,650.

In the case of classes (II), (III) and (V), in which the starting fluoropolyethers have only one functional end group, it is possible to obtain the corresponding difunctionalized product through the process described in IT-A- 22920 A/85.

As mentioned above, the essential feature of an inner lubricant is that of having a critical solubility, limited in a narrow range, in the resin composition in which it is utilized.

It has been ascertained that the products having said feature possess also a critical solubility, limited to an exactly defined range (from 0.05% to 2% by weight at 20°C), in solvents such as tetrahydrofuran (THF), methylethylketone (MEK), isopropanol (iPrOH), these being hydrogenated solvents which, as is known, are used in the resin compositions utilized to form the magnetic layer.

For illustrative purposes, the solubilities of a few fluoropolyether compounds of the invention in the above-said solvents are indicated hereinafter.

Furthermore, the data concerning the solubility of a fluoropolyether compound unsuitable for the purposes of the invention and utilized in the following examples as a comparison are reported too.

**TABLE 1**

| Solubility (% by weight) at 20°C | | | |
|---|---|---|---|
| Substance | THF | MEK | iPrOH |
| A | 0.10 | 0.15 | 0.15 |
| B | 0.12 | 0.17 | 0.18 |
| C | 0.12 | 0.14 | 0.16 |
| D (comparative) | 0.02 | 0.03 | 0.03 |

The substances indicated with A, B, C and D are respectively:
- A :: fluoropolyether of class (I) having a mean molecular weight of the perfluoropolyether chain equal to 2 000 and both end groups of formula - CH₂OCH₂CH₂OH;
- B :: fluoropolyether of class (I) having a mean molecular weight of the perfluoropolyether chain equal to 2 000 and both end groups of formula -CH₂OCH₂CH₂OCH₂CH₂OH;
- C :: fluoropolyether of class (I) having a mean molecular weight of the perfluoropolyether chain equal to 2 000 and both end groups of formula 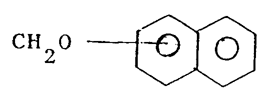
- D :: fluoropolyether of class (I) having a mean molecular weight of the perfluoropolyether chain equal to 2 000 and both end groups of formula

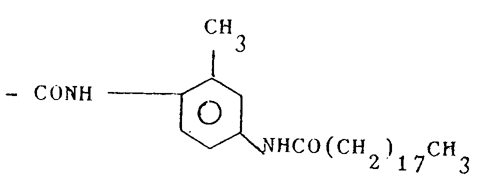

The fluorinated inner lubricants employed according to the invention are utilizable in the resin compositions which form the magnetic layer in amounts ranging from 0.5 to 3% by weight.

The following examples are only illustrative of the invention and are not to be construed as a limitation thereof.

### EXAMPLE 1

### Preparation of video tapes

Video tapes based on polyurethane/epoxy resins were prepared, using the following composition (parts by weight):
a) Pigment (magnetic)

| | |
|---|---|
| ferrite BAYFERROX® AC type 5127 M | 76.0 |

b) Resins

| | |
|---|---|
| phenolepoxy resin UNION CARBIDE UCAR® type PKHH | 4.82 |
| polyurethane prepolymer GOODRICH ESTANE® 5701 F1 | 14.46 |

c) Crosslinking agent

| | |
|---|---|
| DESMODUR® R of Bayer (isocyanate crosslinking agent) | 1.02 |

d) Dispersant

| | |
|---|---|
| GAFAC® RM 710 (phosphoric acid ester) | 3.0 |

e) Inner lubricant :
in variable concentrations from 1 to 3% by weight on the total of the above-specified composition, selected from compounds A, B, C of the invention and comparative compound D described hereinbefore and isocetyl-stearate (ICS) (a further comparative compound, utilized in the art as an inner lubricant).

The coating dispersion was prepared according to known methods by preparing a suspension of the pigment in the solvent (MEK/THF = 30/70) with the aid of the dispersant; the resins dissolved in an analogous solvent, as well as the crosslinking agent and the inner lubricants of the invention were subsequently added. The dispersion contained 50% by weight of solvent and 50% by weight of the other components a) through e) indicated hereinabove. A dispersion in a grinding microball mill was then carried out, followed by filtration of the non-dispersed oxide aggregates.

The resulting magnetic paint was spread by means of the reverse roll coating technique onto 15cm (6") polyethylene terephthalate tapes having a thickness of 50 µm; the magnetic layer was subjected to orientation of the pigment and to calendering.

The tapes so obtained were cut to a size of 1.27cm (1/2") and wound in standard video cassettes VHS.

### EXAMPLE 2

### "Still frame lifetime" test

On the tapes prepared according to example 1, a signal consisting of color bars was recorded, and the signal was reproduced maintaining the tape in the still-frame operation in which the tape stands still and the heads, mounted on the head-holding drum in rotation, continues to slide on the same path.

The lifetime in this test is indicative of the abrasion resistance of the magnetic coating, and therefore it is strongly influenced by the presence of lubricants and by their efficacy.

The results are reported in Table 2.

**Table 2**

| Inner lubricant (% by weight) | Still frame lifetime (minutes) |
|---|---|
| A (1%) | 85 |
| A (3%) | 90 |
| C (1%) | 75 |
| ICS (1%) | 55 |
| ICS (3%) | 50 |

### EXAMPLE 3

The video tapes prepared according to the method of example 1 were subjected to friction coefficient tests in accordance with standards ASTM D 1894-73 and DIN 53375.

The utilized apparatus consisted of a platform of one of the two materials forming the kinematic couple, in the present case a chromium sheet; the other component of the kinematic couple consisted of a loaded slide covered by the tape stretched on it.

The static and the dynamic COFₛ (friction coefficients) are reported in Table 3.

**Table 3**

| Inner lubricant (% by weight) | Static COF | Dynamic COF |
|---|---|---|
| A (1%) | 0.45 | 0.42 |
| A (2%) | 0.45 | 0.44 |
| B (1%) | 0.32 | 0.28 |
| C (1%) | 0.50 | 0.48 |
| D (1%) | 0.65 | 0.61 |
| ICS (1%) | 0.70 | 0.68 |
| ICS (3%) | 0.80 | 0.79 |

### EXAMPLE 4

The tapes prepared according to example 1 were subjected to the abrasion test according to the method developed by the Fulmer Laboratories.

In this test, the abrasivity sensor consisted of a small ceramic cylinder onto which a thin metal layer had been deposited which was abrased by the tape sliding on it.

Said abrasion caused a change in the electric resistance of the thin-film sensor, so giving rise to a signal which, properly processed and calculated as a function of the time, permitted to determine the abrasivity value of the tape, such value being useful to determine the wear of the heads caused by the tape sliding thereon.

The results are expressed in arbitrary units (variation of the electric resistance of the sensor per unit of length of the tape, in particular for an average of 10 passages on 122 m (400 ft) of tape) in Table 4.

**Table 4**

| Inner lubricant (% by weight) | Abrasivity |
|---|---|
| A (1%) | 84 |
| A (3%) | 90 |
| D (1%) | 130 |
| ICS (1%) | 156 |
| ICS (3%) | 321 |
| none | 438 |

## Claims

1. The use of bifunctional fluoropolyether compounds which are liquid at 25°C and have hydrogenated polar or non-polar end groups, an average molecular weight of the fluorooxyalkylene chain of at least 1,000 and a solubility at 20°C in methyl ethyl ketone ranging from 0.05 to 2% by weight, extremes included, as inner lubricants in resin compositions for coatings of magnetic recording media of the flexible type.

2. The use of bifunctional fluoropolyether compounds according to claim 1, wherein the molecular weight of the fluoropolyether chain ranges from 1,800 to 4,500.

3. The use of bifunctional fluoropolyether compounds according to claim 1 or 2, wherein the bifunctional fluoropolyether compounds are selected from those of formulae (I) to (VI):
(I) TO(CF₂CF₂O)ₙ(CF₂O)ₘ-T';
(II) 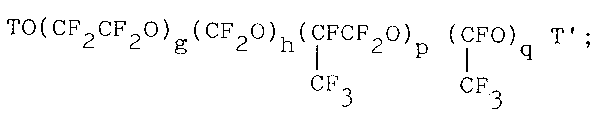
(III) TO(CH₂CF₂CF₂O)ₛT';
(IV) T(OCF₂CF₂CH₂)ₜ OR_{f}O (CH₂CF₂CF₂O)ₜT';
(V) TO(CF₂CF₂O)ᵣT';
(VI) 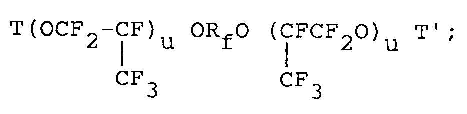
wherein:
T and T', equal or different from each other, are polar or non-polar hydrogenated end groups;
indices n, m, g, h, p, q, s, t, r and u are integers; and R_{f} is a fluoroalkylene radical;
the (per)fluorooxyalkylene units being statistically distributed along the chain.

4. The use of bifunctional fluoropolyether compounds according to claim 3, wherein the end groups T and T' are hydroxy, ester, aromatic or heterocyclic groups containing oxygen.

5. The use of bifunctional fluoropolyether compounds according to claim 3, wherein the end groups T and T' are selected from:
a) 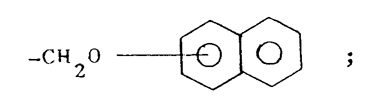
b) -CH₂O-(CH₂CH₂O)_{z}H, where z is in integer from 1 to 3;
c) 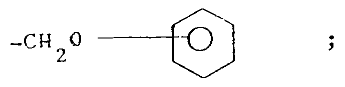
d) -COOR, where R is an alkyl group with 2 to 12 carbon atoms;
e)

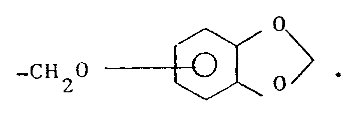

6. The use of bifunctional fluoropolyether compounds according to claim 3, wherein said compounds have the formula (I), wherein T and T' are -CH₂O(CH₂CH₂O)₂H with z being 1 or 2.

7. The use of bifunctional fluoropolyether compounds according to claim 3, wherein said compounds have the formula (I), wherein T and T' are

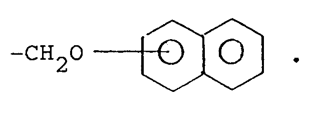

8. Resin compositions containing from 0.5 to 3% by weight or an inner lubricant as defined in any one of claims 1 to 7.

## Patentansprüche

1. Verwendung von bifunktionellen Fluorpolyetherverbindungen, die bei 25°C flüssig sind und hydrierte polare oder nicht-polare Endgruppen, ein durchschnittliches Molekulargewicht der Fluoroxyalkylenkette von wenigstens 1000 und eine Löslichkeit bei 20°C in Methylethylketon im Bereich von 0,05 bis 2 Gew.-%, Grenzwerte eingeschlossen, aufweisen, als innere Schmiermittel in Harzzusammensetzungen für Überzüge von magnetischen Aufzeichnungsmedien des flexiblen Typs.

2. Verwendung von bifunktionellen Fluorpolyetherverbindungen gemäß Anspruch 1, bei welcher das Molekulargewicht der Fluorpolyetherkette im Bereich von 1800 bis 4500 liegt.

3. Verwendung von bifunktionellen Fluorpolyetherverbindungen gemäß Anspruch 1 oder 2, bei welcher die bifunktionellen Fluorpolyetherverbindungen aus denjenigen der Formeln (I) bis (VI) ausgewählt sind:
(I) TO(CF₂CF₂O)ₙ(CF₂O)ₘ-T';
(II) 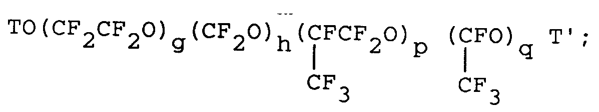
(III)TO(CH₂CF₂CF₂O)ₛT';
(IV) T(OCF₂CF₂CH₂)t OR_{f}O (CH₂CF₂CF₂O)ₜ T';
(V) TO(CF₂CF₂O)ᵣ T';
(VI) 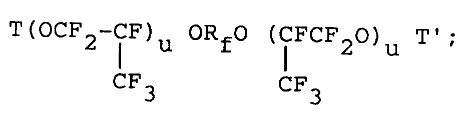
worin:
T und T', gleich oder verschieden voneinander, polare oder nicht-polare hydrierte Endgruppen darstellen;
die Indizes n, m, g, h, p, q, s, t, r und u ganze Zahlen sind; und R_{f} ein Fluoralkylenrest ist;
wobei die (Per)fluoroxyalkyleneinheiten statistisch entlang der Kette verteilt sind.

4. Verwendung von bifunktionellen Fluorpolyetherverbindung gemäß Anspruch 3, bei welcher die Endgruppen T und T' Hydroxy-, Ester-, aromatische oder heterocyclische Gruppen, die Sauerstoff enthalten, darstellen.

5. Verwendung von bifunktionellen Fluorpolyetherverbindungen gemäß Anspruch 3, bei welcher die Endgruppen T und T' ausgewählt sind aus
a) 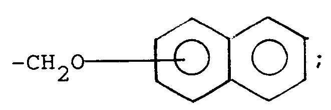
b) -CH₂O-(CH₂CH₂O)_{z}H, wobei z eine ganze Zahl von 1 bis 3 ist;
c) 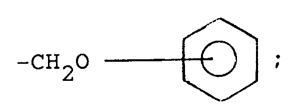
d) -COOR, wobei R eine Alkylgruppe mit 2 bis 12 Kohlenstoffatomen darstellt;
e)

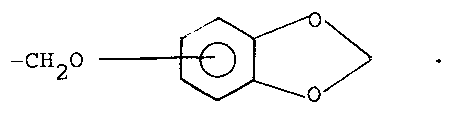

6. Verwendung von bifunktionellen Fluorpolyetherverbindungen gemäß Anspruch 3, bei welcher die Verbindungen die Formel (I) aufweisen, worin T und T' für -CH₂O(CH₂CH₂O)_{z}H stehen, wobei z 1 oder 2 ist.

7. Verwendung von bifunktionellen Fluorpolyetherverbindungen gemäß Anspruch 3, worin die Verbindungen die Formel (I) aufweisen, worin T und T' für 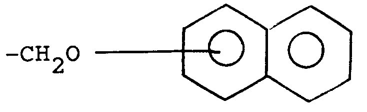 stehen.

8. Harzzusammensetzungen, die 0,5 bis 3 Gew.-% eines inneren schmiermittels wie in irgendeinem der Ansprüche 1 bis 7 definiert enthalten.

## Revendications

1. Utilisation de dérivés fluoropolyéthers bifonctionnels qui sont liquides à 25°C et renferment des groupes terminaux polaires ou non-polaires hydrogénés, présentent un poids moléculaire moyen de la chaîne fluorooxyalkylène au moins égal à 1000 et une solubilité à 20°C dans la méthyléthylcétone étant compris entre 0,05 et 2% en poids, bornes comprises, comme lubrifiants internes dans des compositions de résine pour des revêtements de milieu d'enregistrement magnétique de type flexible.

2. Utilisation de dérivés fluoropolyéthers difonctionnels selon la revendication 1, caractérisée en ce que le poids moléculaire moyen de la chaîne fluoropolyéther est compris entre 1800 et 4500.

3. Utilisation de dérivés fluoropolyéthers difonctionnels selon la revendication 1 ou 2, caractérisée en ce que les dérivés de fluoropolyéther bifonctionnels sont choisis parmi ceux répondant aux formules (I) à (VI);
(I) TO(CF₂CF₂O)ₙ(CF₂O)ₘ-T';
(I) 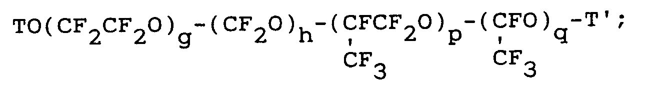
(III) TO(CF₂CF₂CF₂O)ₛ-T';
(IV) T(OCF₂CF₂CH₂)ₜ-OR_{f}O-(CH₂CF₂CF₂O)ₜ-T';
(V) TO(CF₂CF₂O)ᵣ-T';
(VI) 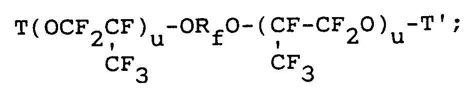
dans lesquelles:
T et T', identiques ou différents l'un de l'autre, sont des groupes terminaux hydrogénés, polaires ou non polaires;
les indices n, m, g, h, p, q, s, t, r et u sont des nombres entiers; et
R_{f} représente un radical fluoroalkylène;
les motifs (per)fluorooxyalkylène étant distribués statistiquement le long de la chaîne.

4. Utilisation de dérivés fluoropolyéthers difonctionnels selon la revendication 3, caractérisée en ce que les groupes terminaux T et T' sont des groupes hydroxy esters aromatiques ou hétérocycliques contenant de l'oxygène.

5. Utilisation de dérivés fluoropolyéthers difonctionnels selon la revendication 3, caractérisée en ce que les groupes terminaux T et T' sont choisis parmi:
a) 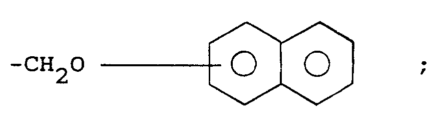
b) -CH₂O-(CH₂CH₂O)_{z}H, dans laquelle z est un nombre entier de 1 à 3;
c) 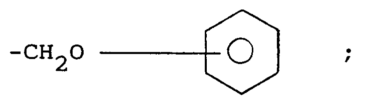
d) -COOR, dans lequel R représente un radical alkyle renfermant de 2 à 12 atomes de carbone;
e)

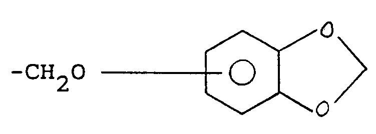

6. Utilisation de dérivés fluoropolyéthers difonctionnels selon la revendication 3, caractérisée en ce que ces dérivés répondent à la formule (I), dans laquelle T et T' représentent -CH₂O(CH₂CH₂O)_{z}H, z étant égal à 1 ou 2.

7. Utilisation de dérivés fluoropolyéthers difonctionnels selon la revendication 3, caractérisée en ce que ces dérivés répondent à la formule (I) dans laquelle T et T' représentent

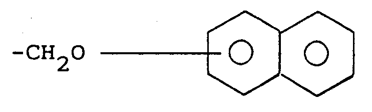

8. Compositions de résine contenant de 0,5 à 3% en poids d'un lubrifiant interne tel que décrit dans l'une quelconque des revendications 1 à 7.
